Europäisches Patentamt

European Patent Office

Office européen des brevets

(11) Publication number: **0 391 860**
**A2**

## EUROPEAN PATENT APPLICATION

(21) Application number: 90830010.6

(51) Int. Cl.⁵: **H02P 7/00, E05F 15/16**

(22) Date of filing: 12.01.90

(30) Priority: 04.04.89 IT 2001089

(43) Date of publication of application:
**10.10.90 Bulletin 90/41**

(84) Designated Contracting States:
**AT BE CH DE DK ES FR GB GR LI LU NL SE**

(71) Applicant: **PREFER COMMERCIALE S.r.L.**
**Via Imbonati, 17**
**I-20159 Milano(IT)**

(72) Inventor: **Finardi, Ivo**
**Prefer Commerciale S.r.l., Via Imbonati, 17**
**I-20159 Milano(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Radio controlling device for controlling motor driven rolling gates and their electric locks.**

(57) The device comprises a power-signal coupling circuitry including a main control circuit block rigid with the rolling gate frame, and a slave control circuit block which is rigid with the rolling gate and accordingly is movable with respect to the main or master circuit control block.

The coupling between these two control circuit blocks is provided, according to the invention, by displacing toward one another the two portions of an olla-shaped core the fixed portion of which, associated with the master control block, includes a primary windings and a reference windings, whereas the movable portion, coupled to the slave control circuit block, includes a secondary winding.

EP 0 391 860 A2

_Fig.1_

## BACKGROUND OF THE INVENTION

The present invention relates to a radio-controlled device, in particular for controlling the automatic raising and lowering displacements of motor controlled rolling gates and for unlocking and locking electric locks associated with these rolling gates.

As is known, there are commercially available automatic devices, generally electrically operated, for raising and lowering rolling gates in general.

These known devices, however, must be manually started for example by operating suitable starting switches or push-buttons, generally arranged at protected zones.

The rolling gates are usually provided with manual mechanical locks and, because of this, the user, before energizing the rolling gate raising motor, for example, must manually open the mechanical lock associated with these rolling gates.

Viceversa, at the end of the lowering displacement of the rolling gate, the user, after having disenergized the rolling gate electric motor through a suitable switch, must close again the rolling gate lock.

These manual locking/unlocking operations as well as starting and stopping operations, require a lot of time and labour.

## SUMMARY OF THE INVENTION

Accordingly, the aim of the present invention is to overcome the above mentioned drawbacks, by providing a fully automatic device for controlling the raising and lowering displacements of motor controlled rolling gates, as well as the opening and closing movements of electric locks associated with these rolling gates.

Within the scope of the above mentioned aim, a main object of the present invention is to provide such a device which can be radio-controlled through an user personal safety code.

Another object of the present invention is to provide such a device which is adapted to remotely power control the electric motor of the electric lock associated with the rolling gate.

Another object of the present invention is to provide such a device which is adapted to control the raising-lowering electric motor of the rolling gate based on a set control code.

Yet another object of the present invention is to provide such a device which is adaped to signal the proper locking or unlocking operation of the lock associated with the rolling gate.

Yet another object of the present invention is to provide such a radio-controlled device, in particular for controlling the raising and lowering displacements of motor controlled rolling gates and the opening and closing operations of electric locks associated with said rolling gates, which comprises power-signal coupling circuit means which are very simple construction wise, of very reduced cost and of a very reliable operation.

According to one aspect of the present invention, the above mentioned aim and objects, as well as yet other objects, which will become more apparent hereinafter, are achieved by a radio-controlled device, in particular for controlling motor driven rolling gates and the electric locks associated therewith, having the features of the characterizing portion of claim 1.

Further features of the device according to the invention are clearly defined in the sub-claims.

## BRIEF DESCRIPTION OF THE DRAWINGS

Further characteristics and advantages of the radio-controlled device, in particular for controlling rolling gates, according to the invention, will become more apparent from the following detailed description of a preferred, though not exclusive, embodiment thereof, which is illustrated, by way of an indicative but not limitative example, in the accompanying schematic drawings, in which:

Figure 1 is an overall block diagram of a preferred embodiment of the radio-controlled device according to the invention,
and

Figure 2 shows a possible circuit diagram of main control blocks included in the device shown in figure 1.

## DESCRIPTION OF THE PREFERRED EMBODIMENT

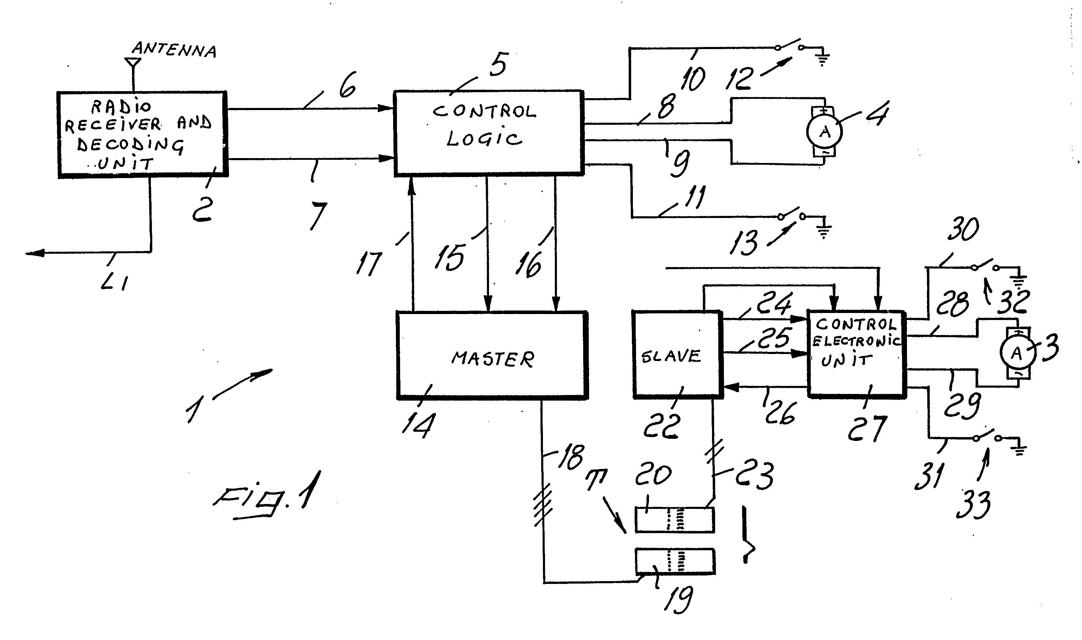

With reference to figure 1, an overall block diagram is herein shown of the device for controlling rolling gates according to the invention, which device has been overally indicated at the reference number 1.

Before disclosing in a detailed way this device, it should be pointed out that the problems which have been found in designing the subject device have mainly been those of trasmitting energizing power to the electric motor controlling the electric lock associated with the rolling gate, transmitting to the control electronic circuit of the unlocking-locking motor, also rigid with the rolling gate, the locking command or the unlocking command, transmitting in a protected manner, locking and unlocking commands to the rolling gate lock electric motor, and providing a signalling related to the success of the locking and unlocking operations.

In order to solve the above mentioned problems, the device shown in figure 1, comprises a first radio-controlling circuit block 2, of any known type, for the rolling gate lock, which has been indicated in a schematic manner by means of its control electric motor 3, and for raising and then lowering the rolling gate, indicated schematically by means of its operating electric motor 4.

Cascade coupled to the first mentioned circuit block 2 there is provided a second circuit block 5 having at least two inputs and, more specifically, an input 6 for providing a lock unlocking or opening command and a further input 7 for providing a lock closure command, said logic control block 7 having a plurality of inputs-outputs, and, in the embodiment being disclosed, at least four inputs-outputs.

Of the mentioned inputs-outputs, two outputs 8 and 9, respectively are power sypply outputs for the rolling gate electric motor 4, whereas two inputs 10 and 11 are coupled to respective microswitches 12 and 13 for providing a top limit of stroke element and a bottom limit of stroke element for the rolling gate, respectively.

Circuitely coupled to the second logic circuit control block 5 there is a third master control circuit block 14, having a plurality of inputs and a plurality of outputs.

More specifically, two inputs 15 and 16 respectively of the master block 14 are provided for the unlocking and locking commands of the rolling gate lock, whereas a feed back coupling 17 connects the circuit block 14 to the circuit block 5, in order to confirm the success of the unlocking or locking operation of the controlled lock which, as stated, is controlled through the mentioned electric motor 3.

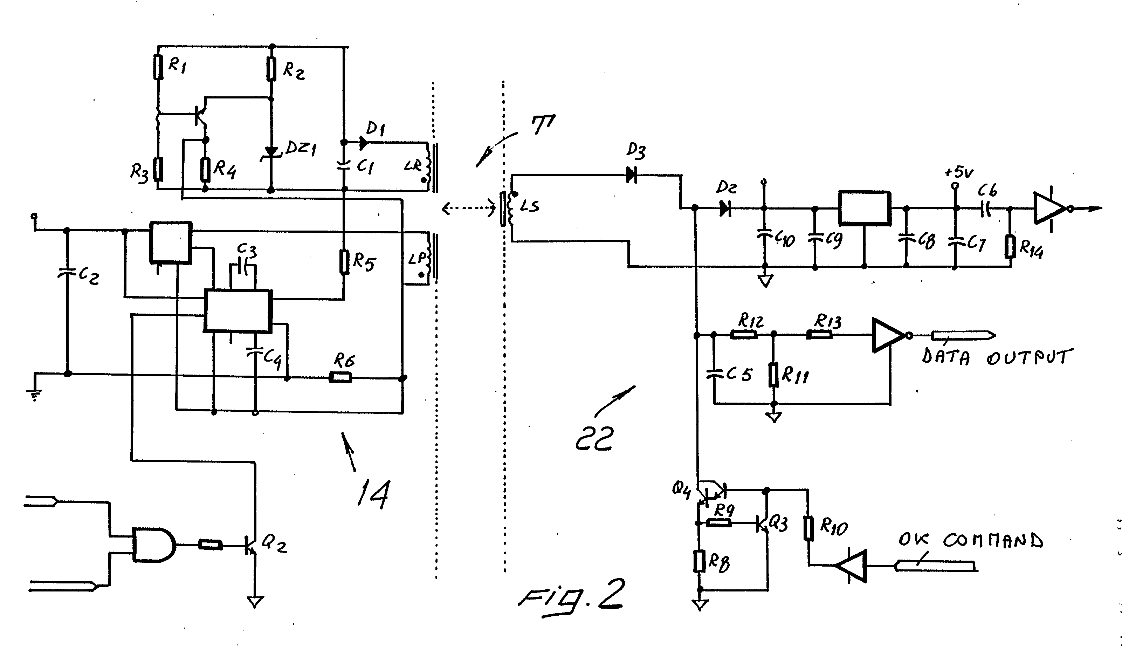

The master control block 14 is provided with a plurality of outputs, schematically indicated as a four-wire output 18, which, according to a main feature of the invention, is coupled to a portion 19 of an olla-shaped core of transformer means T, said portion 19 constituting a fixed portion and including, as clearly shown in figure 2, a primary winding LP and a transfer or reference winding LR.

The second portion 20 of the mentioned olla-shaped core of the transformer T, which portion constitutes a movable portion, is in turn coupled to a further circuit slave control block 22 through the two-wire line 23.

More specifically as is clearly shown in figure 2, on this second movable portion 20 there is arranged a secondary winding LS.

As stated, the slave circuit block 22 is provided with a two wire input line 23 and a plurality of output lines, such as a power energizing line 24, a data line 25 and an information signal feedback line 26.

These lines are circuitally coupled to a last or fifth circuit control block 27, which is provided with a plurality of inputs-outputs, in the embodiment being disclosed four inputs-outputs, of which two outputs, 28 and 29, respectively, form a power supply line for the rolling gate lock motor 3, whereas two inputs, 30 and 31 respectively, provide coupling lines with respective and of stroke or limit microswitches 32 and 33 for the bolt (not shown) of the rolling gate lock, said microswitches being indicative, in other words, of the locking or unlocking condition of the lock.

The electronic circuit block 27, according to the invention, is made rigid with the rolling gate.

The feedback line 26, coupling the circuit block 27 to the slave block 22, in particular, is a signal feedback line 26 which is provided for indicating the success of the lock opening and/or closing operation.

Figure 2 shows a possible schematic circuit diagram of the master circuit block 14 and the slave circuit block 22; these blocks 14 and 22 being, as shown, mutually coupled by mutual induction through the transformer T including three windings and an olla-shaped core, the portion 20 of said core, supporting the secondary winding LS being, as stated, a movable portion.

The circuit details of these blocks are not further disclosed since they will be apparent to those skilled in the art.

From the above disclosure it should be apparent that the invention fully achieves the intended aim and objects.

In particular, it should be apparent that, owing to the disclosed device, it is possible to control the rolling gate electric motor 4 to provide a full closure of the rolling gate. This closure condi tion will be signalled by the microswitch 12 which will supply the indication of the success of the closure operation.

The disclosed device also affords the possibility of remotely controlling the electric motor 3 of the rolling gate lock.

This controlling operation of the electric lock is performed in a coded and accordingly protected manner.

At the end of the lock closing/opening operation, the device will afford the possibility of controlling again the rolling gate electric motor 4 to fully open said rolling gate, this full opening condition being signalled by the microswitch 13.

According to a further aspect of the present invention, the disclosed device can also control auxiliary services; to that end see for example the services control line L1 associated with the radio-receiving and coding block 2.

While the device according to the invention has been disclosed and illustrated with reference to a preferred embodiment thereof, it should be apparent that the disclosed embodiment is susceptible to several modifications and variations all of which will become within the spirit and scope of the appended claims.

For example, the specific circuit means and elements for making the master block and slave block can be any according to requirements.

## Claims

1. A radio-controlling device in particular for controlling the raising and lowering displacements of a motor controlled rolling gate, as well as the locking/unlocking operations of an electric lock associated with said rolling gate, characterized in that said device comprises, in an operative circuitally interconnected relationship:

a) a first radio-receiving and decoding circuit block for receiving and decoding a command code for locking/unlocking said lock of said rolling gate;

b) a second circuit logic control block having at least two inputs and a plurality of inputs-outputs, said at least two inputs being circuitally coupled to two respective outputs of said first radio-receiving and coding block, some of said outputs being circuitally coupled to first electric motor means for raising and lowering said rolling gate;

c) a third circuit master control block having a plurality of inputs and a plurality of outputs, the respective inputs of said third block being circuitally coupled to other outputs of said second block;

d) a fourth circuit slave control block having a plurality of inputs and a plurality of outputs, respective inputs of said fourth block being circuitally coupled to outputs of said third master control block;

e) a fifth circuit control block having a plurality of inputs and a plurality of outputs, respective inputs of said fifth block being circuitally coupled to respective outputs of said fourth block and being further circuitally coupled to second electric motor means for opening and closing the rolling gate electric lock, said device being further characterized in that at least said third master block is rigid with a fixed frame of the rolling gate and at least said fourth slave block is rigid with said rolling gate.

2. A device according to claim 1, characterized in that said first master block and fourth slave block are circuitally coupled by mutual induction means.

3. A device according to claim 2, characterized in that said mutual induction means comprise transformer means.

4. A device according to claim 3, characterized in that said transformer means comprise an olla-shaped core, made of two portions, a portion of said core being fixed and being rigid with said third master block and including primary winding means and reference winding means, and the other portion of said core being movable and being rigid with the fourth slave block and including secondary winding means.

5. A device according to claim 1, characterized in that two respective inputs of said second circuit block are respectively circuitally coupled to first and second means adapted to detect respectively the top end of stroke position and bottom end of stroke position of said rolling gate.

6. A device according to claim 1, characterized in that respective inputs of said fifth circuit block are respectively circuitally coupled to third and fourth means adapted to respectively detect the opening and closing positions of said rolling gate.

7. A device according to claims 5 and 6, characterized in that said first, second, third, fourth position detecting means comprise microswitches.

8. A device according to claim 1, characterized in that between said fifth circuit block and fourth slave circuit block there is provided at least a feedback coupling means.

9. A device according to claim 1, characterized in that between the third master block and second control block there is provided at least a feedback coupling means.

ANTENNA

RADIO RECEIVER AND DECODING UNIT

2

CONTROL LOGIC

5

MASTER

14

SLAVE

22

CONTROL ELECTRONIC UNIT

27

6

7

15

16

17

18

19

20

23

24

25

26

8

9

10

11

12

13

28

29

30

31

32

33

Fig. 1

1

Fig.2